# EUROPÄISCHE PATENTANMELDUNG

(11) **EP 0 994 074 A2**
(43) Veröffentlichungstag der Anmeldung: **19.04.2000**
(21) Anmeldenummer: 99118376.5
(22) Anmeldetag: 16.09.1999
(51) Int. Cl.: C02F 1/46, C25B 11/04

(54) **Anordnung und Verfahren zur anodischen Oxidation von wässrigen Lösungen, Elektrode dafür und Verfahren zur Herstellung dieser Elektrode**

(30) Priorität: 16.09.1998 DE 19842396
(71) Anmelder: FRAUNHOFER-GESELLSCHAFT ZUR FÖRDERUNG DER ANGEWANDTEN FORSCHUNG E.V., 80636 München (DE); METAKEM Gesellschaft für Schichtchemie der Metalle GmbH, 61250 Usingen (DE)
(72) Erfinder: Fryda, Matthias , Dr., 38110 Braunschweig (DE); Hampel Alexander, Dipl.Ing., 38114 Braunschweig (DE); Klages, Claus-Peter, Dr., 38102 Braunschweig (DE); Schäfer, Lothar, Dr., 38527 Meine (DE); Wurm, Jörg, Dr., 61476 Kronberg (DE)
(74) Vertreter: Einsel, Martin, Dipl.-Phys.

(57) **Zusammenfassung**

Eine Anordnung zur anodischen Oxidation von wäßrigen Lösungen, insbesondere zur Wasseraufbereitung, Abwasserbehandlung und Bäderaufbereitung, mit einer Elektrode, an die eine Spannung gelegt wird, zeichnet sich dadurch aus, daß die Elektrode eine Schicht (3) aus Diamant auf einem Grundkörper (1, 2) aufweist und daß die Spannung an der Elektrode in dem Potentialbereich liegt, bei dem noch keine Sauerstoffentwicklung an der Elektrode erfolgt.

## Beschreibung

Die Erfindung betrifft eine Anordnung und ein Verfahren zur anodischen Oxidation von wäßrigen Lösungen, eine Elektrode dafür und ein Verfahren zur Herstellung dieser Elektrode.

Geeignete Elektroden werden für sehr unterschiedliche elektrochemische Verfahren benötigt. Abhängig von verschiedenen Randbedingungen sind die Elektroden teilweise hohen Ansprüchen ausgesetzt. So gibt es Elektrolyte, die besonders aggressiv sind oder die komplexierende Zusätze enthalten, sowie elektrochemische Verfahren, die nur bei bestimmten Überspannungen für Sauerstoff und Chlor ablaufen, bestimmte Temperaturen erfordern, hohe Stromdichten aus wirtschaftlichen Gründen und andere Anforderungen. Es werden auch elektrochemische Verfahren vorgeschlagen, die nicht in die Praxis umgesetzt werden können, da geeignete Elektroden fehlen.

Ein häufiger Anwendungsfall ist die Aufbereitung von Wasser. Wasser muß desinfiziert werden und auch eine Reinigung oder Behandlung von Abwasser ist erforderlich, beispielsweise die Behandlung organischer Reste aus der chemischen, pharmazeutischen oder kosmetischen Industrie. Für solche Zwecke der elektrochemischen Reinigung werden bisher Platin- oder Mischoxidelektroden eingesetzt. An diesen werden unterstützende Redoxsysteme erzeugt, beispielsweise Chlor oder Ozon, die dann wiederum die Keime oder Schadstoffe angreifen und zerstören. In den entstehenden Anlagen sind in der Regel die Elektroden ein Schwachpunkt. Ihre Lebensdauer ist relativ gering oder aber auch die Menge der an den Elektroden gebildeten Oxidationsmittel ist im Vergleich zu der aufgewendeten elektrischen Leistung sehr gering. Solche Verfahren sind daher häufig unwirtschaftlich.

Bekannt sind Elektroden aus den selbstpassivierenden Metallen Titan, Niob, Tantal und Wolfram, die zum Einsatz als Anode mit einer Aktivschicht ganz oder teilweise überzogen sind. Ohne die Aktivschicht sperrt die Elektrode bis auf einen Reststrom und bis zur Durchbruchsspannung den Stromdurchgang. Die Aktivschicht besteht aus einer unter Elektrolysebedingungen beständigen und sich nur sehr langsam verbrauchenden Schicht, entweder auch einer metallischen Schicht, vorwiegend aus Platin und Platinmetallen oder einer oxidischen Schicht, die meist ebenfalls Metalloxide der Platingruppe enthält. Aus Leitfähigkeitsgründen wird der Kern der Elektroden häufig mit einer Seele aus Kupfer oder Aluminium ausgerüstet. Die tatsächlich mit dem Elektrolyten in Kontakt tretende äußere Hülle besteht dann aus einem sich selbst passivierenden Metall, vorwiegend aus Titan. Problematisch ist, daß diese Metalle z. B. in fluoridischen aber auch unter bestimmten Bedingungen in sauren oder alkalischen Medien angegriffen werden. Ebenso bekannt sind Kohlenstoff- bzw. Graphitelektroden.

In der EP 0 730 043 A1 und der EP 0 714 997 B1 wird vorgeschlagen, Elektroden mit Diamantschichten auszurüsten. Dadurch soll die unzureichende Stabilität anderer Elektrodenmaterialien überwunden werden und eine gute, auch elektrochemisch stabile Anbindung an das elektrisch leitende Trägermaterial erreicht werden. Andere Verfahren zur Herstellung von diamantbeschichteten Elektroden auf Silizium werden von G. M. Swain, in: Adv. Mater. 6 (1994) 388 vorgeschlagen. Es geht dabei um die Herstellung sehr kleiner Flächen von maximal 1 cm². Die entsprechenden Elektroden sollen für die elektrochemische Oxidation von photochemischen Bädern besonders geeignet sein.

In der Praxis ist die Verwendung von derartigen Elektroden insbesondere für die Wasseraufbereitung jedoch bisher daran gescheitert, daß diese Flächen zu klein sind. Außerdem wird beispielsweise in der EP 0 730 043 A1 auch schon darauf hingewiesen, daß zusätzliche, spezielle unter Vakuumbedingungen erzeugte Zwischenschichten erforderlich sind und auch dann die Herstellung sehr schwierig sei.

Für den Einsatz dieser Elektroden in Anordnung zur Oxidation von wäßrigen Lösungen, insbesondere zur Wasseraufbereitung, Abwasserbehandlung und Bäderaufbereitung kommen derartige Elektroden anodischen daher nicht in Betracht.

Aufgabe der vorliegenden Erfindung ist es demgegenüber, eine Anordnung zur anodischen Oxidation und ein Verfahren zur Durchführung dieser anodischen Oxidation vorzuschlagen, die insbesondere für die Wasseraufbereitung, die Abwasserbehandlung und die Bäderaufbereitung auch im wirtschaftlichen Maßstab einsetzbar ist sowie ferner eine Elektrode hierfür und ein Verfahren zu ihrer Herstellung sowie ein Verfahren zu ihrem Betrieb vorzuschlagen, das weniger aufwendig ist und widerstandsfähiger ist.

Diese Aufgabe wird durch eine Anordnung zur anodischen Oxidation von wäßrigen Lösungen, insbesondere zur Aufbereitung, Abwasserbehandlung und Bäderaufbereitung, mit einer Elektrode, an die eine Spannung gelegt wird, dadurch gelöst, daß die Elektrode eine Schicht aus Diamant auf einem Grundkörper aufweist und daß die Spannung an der Elektrode während des Betriebs ständig unterhalb des Potentialbereichs liegt, bei dem eine größere Sauerstoffentwicklung an der Elektrode erfolgt.

Eine erfindungsgemäße Elektrode für eine derartige Anordnung zeichnet sich dadurch aus, daß sie eine großflächige Schicht aus dotiertem Diamant auf einem Grundkörper aufweist.

Bei einem Verfahren zur anodischen Oxidation von wäßrigen Lösungen, insbesondere zur Wasseraufbereitung, Abwasserbehandlung und Bäderaufbereitung, mit einer Elektrode, an die eine Spannung gelegt wird, wird die Aufgabe dadurch gelöst, daß eine Elektrode mit einer Schicht aus Diamant auf einem Grundkörper eingesetzt wird, und daß während des Betriebes der Anordnung die Spannung an der Elektrode stets unterhalb des Potentialbereiches gehalten wird, bei dem eine größere Sauerstoffentwicklung an der Elektrode erfolgt.

Ein Verfahren zur Herstellung einer Elektrode für ein solches Verfahren zeichnet sich dadurch aus, daß ein Grundkörper mit einer Diamantschicht mittels des chemischen Gasphasenabscheideverfahrens (CVD) beschichtet wird, wobei der Gasphase ein Dotierungsmittel beigefügt ist.

Überraschenderweise ist es doch möglich, derartige Anordnungen mit Elektroden wirtschaftlich zu betreiben, die eine Diamantschicht aufweisen. Diese Diamantschichten lösen nämlich eine Reihe von Problemen, die mit den bisher zur Verfügung stehenden Elektroden nicht oder nur unbefriedigend gelöst werden konnten. Diamant ist ein Isolator und kann erst seit wenigen Jahren in Schichtform hergestellt werden.

Bei einer näheren Betrachtung des Verhaltens der Elektroden mit Diamantschichten stellte sich nämlich heraus, daß diese ein unerwartetes Verhalten zeigen, das von beispielsweise Mischoxidelektroden nicht bekannt ist.

Nach der Herstellung zeigen die Elektroden mit der Diamantbeschichtung eine hydrophobe, die sich nach einer elektrochemischen Polarisation im positiven Potentialbereich mit beispielsweise einer Ah in eine hydrophile Oberfläche umwandelt. Von H. B. Martin, A. Arguitia, U. Landau, A. B. Anderson, J. C. Angus, in: J. Elektrochem. Sok. 143 (1996) L. 133 ist dieses beschrieben worden und auch schon überlegt worden, daß sich derartige Elektroden mit einer Diamantschicht nach einer Polarisation, also einer oxidativen Vorbehandlung, über sehr lange Zeit stabil und elektrochemisch unverändert verhalten sollten. Der Fachmann geht daher davon aus, daß er diese Elektroden zunächst vorpolarisiert, um diesen wünschenswerten stabilisierten Zustand zu erreichen.

Experimentelle Untersuchen zeigen, daß auch tatsächlich die theoretisch überlegten Effekte eintreten. Die Elektrode arbeitet stabil, allerdings nur noch mit sehr geringer Intensität und ebenso geringer Effektivität, die geringer war als vor dieser Vorpolarisation.

Erfindungsgemäß wird daher eine Anordnung vorgeschlagen, bei der Elektroden eingesetzt werden, die eine Schicht aus Diamant tragen, die aber entgegen allen Empfehlungen nicht vorpolarisiert ist und stets bei einer Spannung betrieben wird, die eine solche Vorpolarisierung verhindert. Die Spannung wird also stets in dem Potentialbereich unterhalb derjenigen Spannung betrieben, bei der sich Sauerstoff entwickeln kann. Um gleichwohl möglichst hohe Effektivitätsgrade zu erhalten, sollte die Spannung zugleich auch möglichst dicht unterhalb dieses Potentialbereichs liegen.

Bei den näheren Untersuchungen des entdeckten Effekts stellte sich heraus, daß sich die Effektivität der Elektrode steigem läßt, wenn man sie vor der eigentlichen Inbetriebnahme gezielt mit einer Ladung von circa 0,1 C/cm² Elektrodenoberfläche beaufschlagt.

Die Effektivität steigt bis ungefähr bis zu dieser Ladung an, um bei weiterer Ladungszufuhr deutlich wieder abzunehmen und schließlich unter den ursprünglichen Wert wie vorbeschrieben abzufallen.

Besonders bevorzugt ist es daher, eine entsprechend vorbehandelte Elektrode in der Anordnung einzusetzen.

Für die Durchführung des Verfahrens ist es natürlich essentiell, daß eine entsprechende Elektrode mit einer Schicht aus Diamant zur Verfügung gestellt werden kann.

Eine solche Elektrode zeichnet sich insbesondere dadurch aus, daß sie eine großflächige Schicht aus dotiertem Diamant auf einem Grundkörper ausweist.

Eine Problemstellung dabei ist unter anderem auch, daß eine Anbindung einer Diamantschicht an Metalle, insbesondere an für Elektroden brauchbare, selbstpassivierende Metalle bisher für nicht möglich gehalten wurde.

Wie sich jedoch herausstellte, ist es entgegen den Erwartungen mit dem Gasphasenabscheideverfahren (CVD) möglich, komplexgeformte, dreidimensionale und genügend große Gegenstände, die als Elektrode eingesetzt werden können, mit einer durchgehenden Diamantschicht zu überziehen. Diese Diamantschicht ist polykristallin. Die homogene Beschichtung von Flächen bis zu einigen 1000 cm² Größe ist möglich, dies sind technisch relevante, einsetzbare Größenordnungen.

Dotierte, insbesondere hochdotierte Diamantschichten besitzen eine hohe elektrische Leitfähigkeit und bilden je nach Dotierungsgrad bei anodischer Polarisation große Überspannungen bei Reaktionen, in denen ein Phasenübergang von flüssiger Phase zur gasförmiger Phase stattfindet. Darüber hinaus besitzen diese Diamantschichten - auch in ihrer dotierten oder hochdotierten Form - eine große Stabilität gegenüber chemischen Angriffen, wodurch das Material für elektrochemische Prozesse in flüssigen Elektrolyten entgegen den früheren Vorurteilen sehr gut geeignet ist. Dies gilt sowohl für wäßrige als auch für wasserfreie Elektrolyte.

Mit dem Gasphasenabscheideverfahren (CVD) insbesondere bei der Niederdrucksynthese ist die Herstellung von Elektroden mit interessanten Eigenschaften wie beispielsweise einer chemischen Inertheit bis 600° C und extrem hohen mechanischen Verschleißbeständigkeiten erzielbar.

Diamantschichten haben allerdings üblicherweise das Problem, daß es bei ihrer Abscheidung schwierig ist, eine gut haftende und porenfreie und elektrisch gut leitende Diamantschicht zu schaffen.

Die Haftung kann jedoch erfindungsgemäß insbesondere durch die prozeßgesteuerte Bildung einer Metallkarbidschicht am Interface, also zwischen dem Grundkörper und der Schicht aus Diamant, deutlich verbessert werden, so daß sich eine gute mechanische Stabilität ergibt.

Hier ist es von besonderem Vorteil, wenn als Grundkörper für die Beschichtung mit der Diamantschicht ein sich selbst passivierendes Metall eingesetzt wird. Theoretisch könnte, eine dichte Diamantschicht vorausgesetzt, als Grundwerkstoff jedes leitende Material verwendet werden. Da Beschichtungen jedoch Poren, Risse und dgl. aufweisen können, werden für unlösliche, beschichtete Elektroden stets sich selbst passivierende Metalle einsetzt. Dabei ist es besonders bevorzugt, wenn dieses selbstpassivierende Metall Titan, Niob oder Tantal oder eine Legierung mit mindestens einem dieser Metalle ist.

Möglich ist auch der Einsatz von Zirkon oder Wolfram und Legierungen aus diesen Materialien oder auch anderen selbstpassivierenden Metallen; aus Kostengründen ist jedoch Titan die erste Wahl.

Bevorzugt wird auch bei diesen Elektroden der Kern von einer Kupfer- oder Aluminiumseele gebildet, die sich durch besonders hohe Leitfähigkeit und relativ geringe Kosten auszeichnet. Dieser Kern ist mit einer dichten Hülle aus dem selbst passivierenden Metall, vorzugsweise also Titan überzogen. Auf dieser Hülle befindet sich dann erfindungsgemäß die elektrisch leitfähige dotierte Diamantschicht. Es entsteht insgesamt eine Art Verbundmaterialelektrode.

Diese ist elektrisch aktiv, chemisch inert, vergleichsweise günstig herzustellen und vielseitig anwendbar.

Bevorzugt besitzt die erfindungsgemäße Elektrode eine sogenannte Streckmetallform.

Dadurch kommen vorteilhafte Eigenschaften zur Geltung, wie guter Elektrolytaustausch, kostensparende Verwendung teurer Grundmetalle, sowie eine weitgehend homogene Stromabgabe durch homogen verteilte bevorzugte Stellen für die Anodenreaktion wie Spitzen und Kanten. Darüber hinaus ist eine solche Form besonders zuverlässig beschichtbar.

Ein bevorzugtes Verfahren zur Herstellung der Elektroden zeichnet sich dadurch aus, daß eine Beschichtung mit dem sogenannten chemischen Gasphasenabscheideverfahren (Chemical Vapor Deposition, CVD) vorgenommen wird.

Um die Dotierung zu erreichen, wird der Gasphase bevorzugt Trimethylborat zugesetzt, und zwar bevorzugt so, daß das Verhältnis von Trimethylborat zu Methan 1:1 nicht überschreitet.

Je nach Verwendung (große oder kleine Überspannung in den elektrochemischen Prozessen, die mit der Elektrode vorgenommen werden sollen) wird der Borgehalt über den Boratanteil in der Gasphase eingestellt.

Das Verfahren läuft beispielsweise wie folgt ab: Die metallischen Grundkörper werden durch ein Sand- oder Kugelstrahlen oberflächlich aufgerauht. Diese Aufrauhung dient der Erzielung einer guten Haftung der aufzubringenden Diamantschicht. Es erfolgt eine Vorbekeimung der Elektroden bzw. Anoden in einer Suspension von Nanodiamant- und 0,25 µm-Diamantpulver in Ethanol. Anschließend erfolgt eine Reinigung in Ethanol.

Die Grundkörpermetalle werden dann oberflächlich karburiert, indem sie in diskreten Schritten auf die Prozeßtemperatur unter Gegenwart von Kohlenwasserstoffen und Wasserstoff aufgeheizt werden.

Für den Beschichtungsprozeß mit dem Gasphasenabscheideverfahren (chemical vapor deposition, CVD) werden die Heiz- oder Glühdrähte, üblicherweise als Filamente bezeichnet, auf eine Temperatur von 2.000 °C bis 2.400 °C aufgeheizt.

Dadurch wird eine hohe Aktivierung der Gasphase für den Beschichtungsprozeß erzielt. Substratseitig wird jedoch dafür gesorgt, daß je nach Material Temperaturen von 600 °C bis 950 °C nicht überschritten werden.

Dies kann durch Anpassung der Filamentdurchmesser, der Filamentabstände und des Filament-Substrat-Abstandes geschehen.

Die Gasphase besteht bevorzugt aus 95 % bis 99,9 %, insbesondere aus 99 % Wasserstoff (H₂) und 0,1 % bis 5 %, insbesondere aus 0,5 % bis 1 % Methan (CH₄) sowie aus Trimethylborat mit einem Anteil von etwa 1 ppm bis 1 %. Diese Angaben beziehen sich jeweils auf Volumenanteile. Es wird dabei, wie erwähnt, soviel Trimethylborat zugesetzt, daß das Verhältnis zu dem enthaltenen Methan 1:1 nicht überschreitet. Aus dem Methan sowie den Methylgruppen des Trimethylborats werden die Kohlenstoffatome für den Aufbau der Diamantschicht bezogen. Für den Aufbau der Diamantschicht gibt es einen optimalen Anteil des Methans in der Gasphase; ist der Anteil zu hoch, leidet die Qualität, ist der Anteil eher gering, wird die Wachstumsrate unwirtschaftlich. Anteile um 0,5 % bis 1 % (bezogen auf das Volumen) von Methan in der Gasphase haben sich als günstig herausgestellt.

Der Zusatz von Trimethylborat führt nicht nur zur Dotierung mit Bor, sondern auch zu einer weiteren Kohlenstoffquelle, was zu berücksichtigen ist.

Der Prozeßdruck wird auf 5 bis 50 hPa eingestellt, kann in bestimmten Fällen aber auch bis zu 300 hPa betragen.

Die erzielte Dicke der Beschichtung mit dem auf diese Weise dotierten Diamant liegt zwischen 2 und 50 µm. Die Dotierung mit Bor in der Diamantschicht liegt zwischen 10 ppm und 10 000 ppm, kann also bis zu 1 % betragen, wird aber im Regelfall deutlich darunter liegen.

Die Karburierung kann auch in einer Alternative integriert in das Gasphasenabscheideverfahren erfolgen:

Bei der Beschichtung des Grundkörpermetalls ohne vorherige separate Karburierung entsteht aufgrund der Anwesenheit von Methan und gegebenenfalls Trimethylborat in der Gasphase aufgrund chemischer Reaktionen ebenfalls Metallkarbid, bis durch die gleichzeitige Abscheidung von Diamant und damit Isolierung der vorhandenen Metalloberfläche gegenüber dem Methan und dem Trimethylborat diese chemische Reaktion beendet wird.

Eine gezieltere Steuerung des Prozesses ist bei separater Karburierung möglich, durch gezielte Prozeßsteuerung können auch Mischformen beider Alternativen eingesetzt werden.

Ein Einsatzgebiet ist die elektrochemische Aufbereitung und Behandlung von Trinkwasser. Dabei werden organische Keime durch Chlor und Sauerstoff zerstört. Der im Trinkwasser gelöste Kalk fällt auf der Kathode aus. Um ihn abzusprengen, wird die Elektrolysezelle umgepolt. Die frühere Anode ist dann immer wieder für eine gewisse Zeit kathodisch polarisiert. Herkömmliche Elektroden werden bei diesem Vorgang schneller verbraucht als bei alleiniger anodischer Belastung.

Die Abtragsraten von Anoden mit Platin- oder mit Mischoxidbeschichtung nehmen mit der Stromdichte merklich zu. Anoden mit Diamantbeschichtung haben in Versuchen bei hohen Stromdichten Standzeiten erreicht, bei denen andere Anoden bereits zerstört waren.

Aufgrund dieser Beobachtung kann erwartet werden, daß diamantbeschichtete Metallanoden nicht nur in Fällen, in denen herkömmliche Titananoden - aus welchen Gründen auch immer - eine schlechte Standzeit haben, eine technisch vorteilhafte Lösung darstellen, sondern auch in Fällen, in denen herkömmliche Anoden nach heutigen Maßstäben eine befriedigende Standzeit besitzen, wegen einer längeren Standzeit den Anwendern Kostenvorteile bringen.

Im folgenden wird anhand der Zeichnung ein Ausführungsbeispiel für eine erfindungsgemäße Elektrode erläutert. Es zeigen:
- **Figur 1**: einen Querschnitt durch eine Elektrode; und
- **Figur 2**: ein Zyklovoltammogramm einer Elektrode mit einer Schicht aus Diamant gemäß der vorliegenden Erfindung.

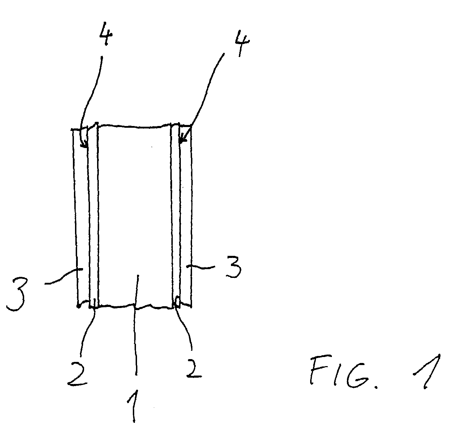

In der **Figur 1** sind die Größenverhältnisse nicht maßstabsgetreu, sie ist rein schematisch. Es ist auch zu berücksichtigen, daß der Gesamtaufbau derartiger Elektroden häufig in Streckmetallform oder auch anderen Ausbildungen erfolgen kann, hier ist der Einfachheit halber ein zylindrischer Aufbau gewählt worden.

Elektroden werden im Regelfall als Anoden eingesetzt, häufig spricht man daher auch generell von "Anoden".

Zu erkennen ist der innere Kern 1 der Elektrode, der beispielsweise aus Kupfer oder Aluminium bestehen kann.

Er ist von einer Hülle 2 aus einem selbst passivierenden Metall, beispielsweise aus Titan, umgeben.

Der Kern 1 und die Hülle 2 bilden zusammen den Grundkörper 1, 2. Um den Grundkörper 1, 2 (also aufgelegt auf die Hülle 2) ist die Schicht 3 aus elektrisch leitfähigem, dotiertem Diamant dargestellt.

Am Interface zwischen dem Grundkörper 1, 2 also außen auf der Hülle 2 unterhalb der Schicht 3 aus Diamant befindet sich eine karburierte Metallschicht 4. Besteht wie in diesem Beispiel die Hülle 2 aus Titan, würde es sich also um Titankarbid (TiC) handeln. Die elektrisch leitende Schicht 3 aus Diamant besitzt einen spezifischen Widerstand zwischen 0,01 Ωcm und 10 Ωcm.

Sie ist direkt auf dem Grundkörper 1, 2 elektrochemisch stabil abgeschieden. Der Grundkörper 1, 2 kann nicht nur aus einem metallischem Material (Niob, Tantal, Titan, Wolfram, Zirkon), sondern auch aus graphitischem Material oder aus keramischem Material (Silizium, Siliziumkarbit, Siliziumnitrit, sisic) bestehen. Der Grundkörper 1, 2 kann eine Platte sein, es kann sich aber auch um ein Streckmetall handeln. Die Flächen können 50 cm x 60 cm groß sein, aber auch noch größere Flächen sind denkbar.

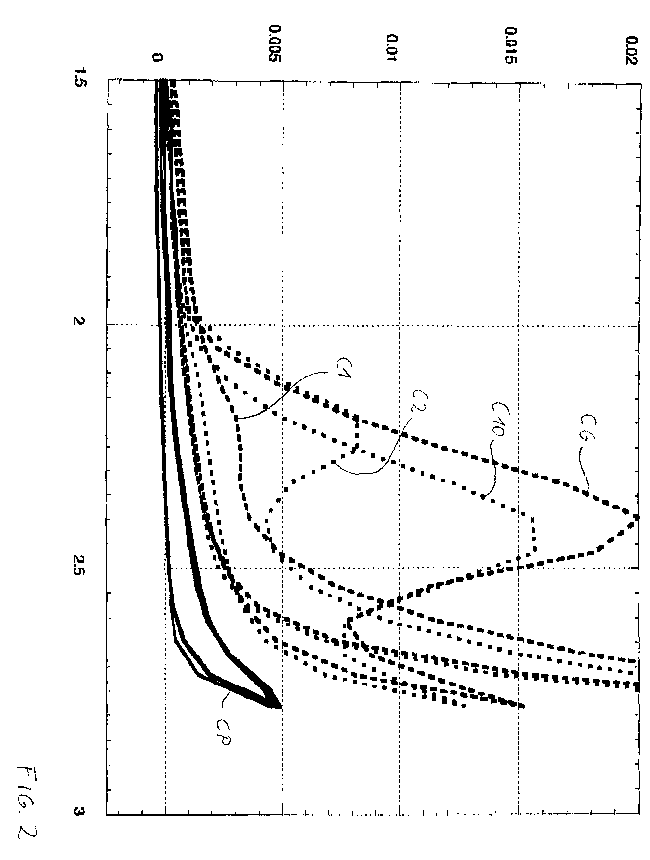

In der **Figur 2** ist ein unerwartetes Verhalten von Elektroden anhand eines Zyklovoltammogramms dargestellt. Nach rechts ist das Potential gegenüber einer Standardwasserstoffelektrode (SHE) in Volt aufgetragen, nach oben die Stromdichte in A/cm². Die bei der Aufnahme dieses Zyklovoltammogramms herrschende Temperatur betrug 25 °C, die Gegenelektrode bestand aus Platin und als Elektrolyt wurde ein N H₂SO₄ eingesetzt. Die Meßgeschwindigkeit betrug 200 mV/s.

Das Zyklovoltammogramm zeigt in der durchgezogenen Linie das Verhalten einer Diamantelektrode, nachdem sie vorpolarisiert worden ist. Hier hat es also eine oxidative Vorbehandlung gegeben, beispielsweise durch das Anlegen einer sehr hohen Spannung über einen längeren Zeitraum.

Die anderen unterschiedlich punktierten Linien zeigen das Verhalten der erfindungsgemäßen Diamantelektrode ohne eine solche Vorpolarisierung. Bereits beim ersten Zyklus zeigt sich im Bereich um etwa 2,2 V ein kleines Maximum beziehungsweise ein Wendepunkt bei etwa 2,35 V. Dieses Maximum deutet auf ein elektrochemische Reaktion hin. Erst bei noch höherer Spannung tritt das erwartete Maximum an Stromdichte durch die zunehmende Sauerstoffentwicklung ein.

Läßt man die gleiche Elektrode jetzt einen weiteren Zyklus durchlaufen, so wird das Maximum bei etwa 2,2 V schon sehr deutlich und das anschließende Minimum bei 2,4 V ist klar erkennbar.

Dieser Trend setzt sich mit weiteren Zyklen fort. Er wird am stärksten im 6. Zyklus, wobei sich das Maximum hier zu etwa 2,4 V hinverschoben hat und auch das anschließende Minimum jetzt bei einem höheren Spannungswert von etwa 2,65 V eintritt.

Bei noch weiteren Zyklen nimmt die Größe des Maximums dann wieder deutlich ab. Dargestellt ist noch die Kurve für den 10. Zyklus. Das Maximum verschiebt sich weiter zu höheren Spannungswerten, nimmt aber in seiner Höhe ab. Auch das anschließende Minimum verschiebt sich zu höheren Spannungswerten. Diese Tendenz setzt sich bei weiteren, hier in der Figur nicht mehr dargestellten Zyklen fort.

Die nicht reversible, elektrochemische Reaktion nimmt also mit jedem Zyklus zunächst an Intensität zu, um dann wieder abzunehmen. Letztlich ist die durchgezogene schwarze Linie zugleich eine tendenzielle Entwicklung, die auch bei weiteren Zyklen dann als Grenzwert angestrebt wird.

Es ist wiederum deutlich zu erkennen, daß die elektrochemische Reaktion nach der Vorpolarisation nur noch mit geringer Intensität abläuft. Bei dieser Reaktion handelt es sich um die Bildung von sehr reaktiven Sauerstoffverbindungen.

Diese Reaktion findet auch an anderen Elektrodenmaterialien statt, allerdings nur unter gleichzeitiger Bildung von Sauerstoff und somit mit deutlich niedrigerer Effizienz.

In der Praxis wird man das Potential den Elektroden nicht in Form eines oder mehrerer Zyklen zuführen, da dieses sehr aufwendig ist. Mit Hilfe dieser Zyklen kann man jedoch für einen bestimmten Elektrodentyp sehr präzise ermitteln, bei welcher zugeführten Ladung sie am effektivsten arbeitet, daß heißt, ab welcher Ladung die Effektivität wieder abnimmt.

Genau betrachtet handelt es sich hier um die Ladung pro Flächeneinheit der Elektrodenoberfläche. Bei unterschiedlichen Elektrodentypen variiert jedoch die optimale Ladungsmenge pro Flächeneinheit. Dies liegt daran, daß die Oberflächenstruktur, also beispielsweise die Kristallorientierung oder auch die Form der Elektrode diesen maximalen Bereich beeinflussen.

Ist jedoch für einen bestimmten Elektrodentyp durch Durchlaufen mehrerer Zyklen dieser Ladungsgehalt experimentell bestimmt, kann bei weiteren Elektroden des gleichen Typs die Ladung gezielt zugeführt werden, also nicht in mehreren Zyklen, sondern durch entsprechende zeitliche Beaufschlagung einer jeden Elektrode eben mit dieser Ladung.

Experimentell hat sich herausgestellt, daß der optimale Bereich bei ungefähr 0,1 Coulomb pro Quadratzentimeter, also 0,1 C/cm², liegt.

Der Hintergrund dieses unerwarteten und bisher in Veröffentlichungen noch nicht berichteten Effekts liegt vermutlich darin, daß diese Ladungszufuhr die Bildung von OH-Gruppen auf der Kristalloberfläche fördert, die anschließend die Effektivität der Elektrode steigern. Wird mehr Ladung als zur maximalen Effektivität zugeführt, beginnen diese OH-Gruppen möglicherweise miteinander zu reagieren und dadurch die Effektivität wieder nach Erreichen des Maximums herabzusetzen.

Aus dieser Untersuchung wird deutlich, daß die übliche Vorpolarisation für die Erzeugung solcher reaktiver Sauerstoffkomponenten extrem nachteilig ist.

Solange jedoch an einer Diamantelektrode kein Potential angelegt wird, bei dem sich Sauerstoff bildet, bleiben die Elektroden für die Herstellung dieser reaktiven Verbindungen stabil. Dieser Effekt wird erfindungsgemäß ausgenutzt, indem der Betrieb gerade bei einem Potential stattfindet, das diese Sauerstoffbildung vermeidet.

Erst wenn noch höhere Potentiale beziehungsweise die übliche, für den Fachmann naheliegende Sauerstoffentwicklung eingestellt wird, verlieren die erfindungsgemäßen Elektroden mit der Schicht aus Diamant ihre hohe Effizienz und werden dann mit anderen, herkömmlichen Materialien vergleichbar.

Diese Eigenschaften gelten allgemein für die oxidativen Eigenschaften der Elektroden mit einer Schicht aus Diamant, und zwar unabhängig von dem betrachteten Redoxsystem.

In weiteren Untersuchungen auch mit anderen Elektrolyten konnte ebenfalls gezeigt werden, daß derartige reaktive Sauerstoffverbindungen gebildet werden. So wurde zum Beispiel als Elektrolyt Natronlauge NaOH mit Erfolg eingesetzt.

Auch in dem alkalischen Elektrolyten fand eine intensive Bildung reaktiver Sauerstoffspezies vor der eigentlichen Sauerstoffentwicklung statt.

Mit den erfindungsgemäßen Elektroden läßt sich somit unter Berücksichtigung der speziellen Potentialbereiches ein sehr effizientes Verfahren durchführen. Dieses Verfahren steht zum Beispiel für die Entkeimung von Trinkwasser zur Verfügung. Es kann aber auch für die Abwasserreinigung eingesetzt werden.

Je nach der betrachteten Umgebung hinsichtlich des pH-Bereiches und der Anwesenheit von Ionen, beispielsweise von Chloridionen oder Sulfationen, können sehr starke Oxidationsmittel wie beispielsweise Ozon oder Peroxoverbindungen gebildet werden, beispielsweise Peroxodisulfat, Perchlorad, Wasserstoffperoxid und andere. Mit diesen starken Oxidationsmitteln können dann die Keime, Bakterien und Vieren oder auch organische Verbindung zuverlässig zerstört werden. Das Trinkwasser ist damit effektiv und zuverlässig entkeimt. Im Abwasser können die unerwünschten Verbindungen auf diese Weise zerstört werden und eine Weiterbehandlung ist möglich.

Unter den beschriebenen Bedingungen sind die erfindungsgemäßen Elektroden mit einer Schicht aus Diamant auch extrem stabil. Selbst nach einigen 1000 AhCM¹⁻ konnte keine Veränderung der Elektrode nachgewiesen werden.

Typischerweise würde eine Zelle zur Aufbereitung des Wassers aus einem Elektrostapel bestehen, bei dem es sich je nach der Zusammensetzung des zu behandelnden Wassers (Dichte an Partikeln oder anderen Fremdstoffen, Strömungsgeschwindigkeit u. ä.) um Platten oder Streckmetalle handeln kann, und der entweder abwechselnd elektrisch kontaktiert oder bipolar aufgebaut wird, so daß nur die beiden äußeren Elektroden kontaktiert werden müssen. Für den Betrieb muß das zu verwendende Potentialfenster dann an die überwiegend vorherrschenden Bedingungen (pH und Zusammensetzung) angepaßt werden.

Anwendungen können die Desinfektionen von Trinkwasser beziehungsweise die Erhaltung der Keimfreiheit in Leitungssystemen in großen Komplexen wie Krankenhäuser, Hotels, Heimen und Schwimmbädern, die Abwasseraufbereitung in industriellen Anlagen beziehungsweise die Behandlung von besonders schwer belasteten oder mit schwer zerstörbaren organischen Verbindungen belasteten Abwässern sowie die zuverlässige Entkeimung beispielsweise von Klimaanlagen sein.

Es entsteht ein System zur Wasserentkeimung und - Desinfektion unter Verwendung von Diamantelektroden, die in dem Potentialbereich vor der Sauerstoffentwicklung betrieben werden, durch Bildung von Ozon oder Peroxoverbindungen.

Außerdem wird ein System zur Reinigung von organischen Komponenten in Abwässern möglich, beispielsweise zur Reinigung von Schmierstoffen aus Bearbeitungsbetrieben, allgemein von organischen Resten aus der chemischen, pharmazeutischen und kosmetischen Industrie; von organischen Zusätzen in galvanischen Abfällen.

Schließlich ergibt sich ein System zur Oxidation und damit zur Zerstörung von anorganischen Verbindungen wie Zyanid in Abwässern.

Möglich werden außerdem Behandlungen von Bädern, die mit organischen Additiven arbeiten, beispielsweise zu Reinigungszwecken in der fertigungstechnischen Industrie. Sind diese Zusätze verbraucht, mußte bisher das komplette Bad ausgewechselt werden, alternativ konnte noch eine Filterung mit Aktivkohle in Betracht kommen, ein teuerer, langsamer Prozeß.

Erfindungsgemäß werden die Additive beziehungsweise ihre Reste jetzt durch die Elektroden gezielt zerstört. Nur diese Additive müssen dann neu in gewünschter Menge zugegeben werden.

### Bezugszeichenliste

- 1.: Kern
- 2.: Hülle
- 3.: Schicht
- 4.: Metallschicht
- 1, 2: Grundkörper
- C 1: erster Zyklus
- C 2: zweiter Zyklus
- C6: sechster Zyklus
- C 10: zehnter Zyklus
- CP: Zyklus nach voller Polarisation

## Patentansprüche

1. Anordnung zur anodischen Oxidation von wäßrigen Lösungen, insbesondere zur Wasseraufbereitung, Abwasserbehandlung und Bäderaufbereitung, mit einer Elektrode, an die eine Spannung gelegt wird,
**dadurch gekennzeichnet,**
**daß** die Elektrode eine Schicht (3) aus Diamant auf einem Grundkörper (1, 2) aufweist und
**daß** die Spannung an der Elektrode während des Betriebs ständig unterhalb des Potentialbereichs liegt, bei dem eine größere Sauerstoffentwicklung an der Elektrode erfolgt.

2. Anordnung nach Anspruch 1,
**dadurch gekennzeichnet,**
**daß** die Spannung an der Elektrode während des Betriebs gerade in dem Potentialbereich liegt, bei dem eine Sauerstoffentwicklung beginnt.

3. Anordnung nach Anspruch 1 oder 2,
**dadurch gekennzeichnet,**
**daß** die Elektrode nicht vorpolarisiert, aber durch eine Vorbehandlung mit einer Ladung von 0,01 bis 1 C/cm² Elektrodenoberfläche vor der Erstinbetriebnahme in den Potentialbereich versehen worden ist.

4. Anordnung nach Anspruch 3,
**dadurch gekennzeichnet,**
**daß** eine Vorbehandlung mit einer Ladung von 0,05 bis 0,2 C/cm², insbesondere von 0,1 C/cm² Elektrodenoberfläche erfolgt.

5. Elektrode für eine Anordnung nach einem der Ansprüche 1 bis 4,
**dadurch gekennzeichnet,**
**daß** sie eine großflächige Schicht (3) aus dotiertem Diamant auf einem Grundkörper (1, 2) aufweist.

6. Elektrode nach Anspruch 5,
**dadurch gekennzeichnet,**
**daß** der Grundkörper (1, 2) unterhalb der Schicht (3) aus Diamant ein selbst passivierendes Metall, insbesondere Titan, Niob, Tantal, Zirkon, Wolfram oder eine Legierung mit mindestens einem dieser Metalle, oder aber Silizium Si, Siliziumcarbid SiC, siliziumfiltriertes Siliziumcarbid SiSiC oder siliziumbasierte Keramiken aufweist.

7. Elektrode nach Anspruch 5 oder 6,
**dadurch gekennzeichnet,**
**daß** zwischen dem Grundkörper (1, 2) und der Schicht (3) aus Diamant eine haftvermittelnde und während der Elektrolyse oxidationsstabile Zwischenschicht (4) vorgesehen ist, insbesondere eine Metallcarbidschicht.

8. Elektrode nach einem der Ansprüche 5 bis 7,
**dadurch gekennzeichnet,**
**daß** der Grundkörper (1, 2) einen Kern (1) aus einem leitfähigen Material besitzt, der von einer Hülle (2) aus dem selbst passivierenden Metall umgeben ist.

9. Elektrode nach einem der Ansprüche 5 bis 8
**dadurch gekennzeichnet,**
**daß** die Schicht (3) aus Diamant mit Bor dotiert ist, wobei bevorzugt die Dotierung der Schicht (13) aus Diamant mit Bor in dem Bereich zwischen 10 ppm und 10.000 ppm liegt.

10. Elektrode nach einem der Ansprüche 5 bis 9,
**dadurch gekennzeichnet,**
**daß** der Grundkörper (1, 2) als Streckmetall ausgebildet ist.

11. Elektrode nach einem der Ansprüche 5 bis 10,
**dadurch gekennzeichnet,**
**daß** sie nicht vorpolarisiert ist, aber durch eine Vorbehandlung mit einer Ladung von 0,01 bis 1 C/cm² Elektrodenoberfläche vor der Erstinbetriebnahme in den Potentialbereich versehen worden ist, insbesondere eine Vorbehandlung mit einer Ladung von 0,05 bis 0,2 C/cm², insbesondere von 0,1 C/cm² Elektrodenoberfläche erfolgt.

12. Verfahren zur anodischen Oxidation von wäßrigen Lösungen, insbesondere zur Wasseraufbereitung, Abwasserbehandlung und Bäderaufbereitung, mit einer Elektrode, an die eine Spannung gelegt wird,
**dadurch gekennzeichnet,**
**daß** eine Elektrode mit einer Schicht (3) aus Diamant auf einem Grundkörper (1, 2) eingesetzt wird, und
**daß** während des Betriebes der Anordnung die Spannung an der Elektrode stets unterhalb des Potentialbereich gehalten wird, bei dem eine größere Sauerstoffentwicklung an der Elektrode erfolgt.

13. Verfahren nach Anspruch 12,
**dadurch gekennzeichnet,**
**daß** die Spannung an der Elektrode während des Betriebs gerade in dem Potentialbereich liegt, bei dem eine Sauerstoffentwicklung beginnt.

14. Verfahren nach Anspruch 12 oder 13,
**dadurch gekennzeichnet,**
**daß** die Elektrode nicht vorpolarisiert, aber durch eine Vorbehandlung mit einer Ladung von 0,01 bis 1 C/cm² Elektrodenoberfläche vor der Erstinbetriebnahme in den Potentialbereich versehen worden ist.

15. Verfahren zur Herstellung einer Elektrode für ein Verfahren nach einem der Ansprüche 12 bis 14,
**dadurch gekennzeichnet,**
**daß** ein Grundkörper (1, 2) mit einer Diamantschicht (3) mittels des chemischen Gasphasenabscheideverfahrens (CVD) beschichtet wird, wobei der Gasphase ein Dotierungsmittel beigefügt ist.

16. Verfahren nach Anspruch 15,
**dadurch gekennzeichnet,**
**daß** der Gasphase Trimethylborat zugesetzt wird, wobei insbesondere das Verhältnis von Trimethylborat zum Methan in der Gasphase 1:1 nicht überschreitet.

17. Verfahren nach Anspruch 16,
**dadurch gekennzeichnet,**
**daß** die Gasphase des Gasphasenabscheideverfahrens 95 bis 99,9 Volumenprozent Wasserstoff, 0,1 bis 5 Volumenprozent Methan und 1 ppm bis 1 Volumenprozent Trimethylborat, insbesondere 99 Volumenprozent Wasserstoff, 0,5 bis 1 Volumenprozent Methan und 1 ppm bis 1 Volumenprozent Trimethylborat aufweist.

18. Verfahren nach einem der Ansprüche 15 bis 17,
**dadurch gekennzeichnet,**
**daß** beim Gasphasenabscheideverfahren die Temperatur der Heiz- oder Glühdrähte (Filamente) 2.000 °C bis 2.400 °C beträgt und/oder der Druck zwischen 5 und 300 hPa, insbesondere zwischen 10 und 50 hPa liegt.

19. Verfahren nach einem der Ansprüche 15 bis 18,
**dadurch gekennzeichnet,**
**daß** vor der Beschichtung mittels des chemischen Gasphasenabscheideverfahrens eine oberflächliche Karburierung des Grundkörpers (1, 2) erfolgt, insbesondere in einem separaten Schritt als chemische Reaktion von Kohlenwasserstoffen mit dem Metall des Grundkörpers (1, 2) oder als integrierter Schritt beim Gasphasenabscheideverfahren durch chemische Reaktion der in der Gasphase vorhandenen Kohlenwasserstoffe, insbesondere des Methans und des Trimethylborats, mit der metallischen und noch nicht diamantbeschichteten Oberfläche des Grundkörpers (1, 2).
